(19) Europäisches Patentamt
European Patent Office
Office européen des brevets

(11) **EP 4 578 748 A1**

(12) **EUROPEAN PATENT APPLICATION**

(43) Date of publication:
**02.07.2025 Bulletin 2025/27**

(21) Application number: **24217797.0**

(22) Date of filing: **05.12.2024**

(51) International Patent Classification (IPC):
**B60T 13/74** (2006.01)          **B60T 17/22** (2006.01)
**F16D 55/226** (2006.01)          **F16D 65/18** (2006.01)
**F16D 65/56** (2006.01)

(52) Cooperative Patent Classification (CPC):
**B60T 13/741; B60T 17/22; F16D 55/226;
F16D 65/183; F16D 65/567;** F16D 2121/24;
F16D 2125/36; F16D 2125/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.12.2023   CN 202311864055**

(71) Applicant: **Huawei Digital Power Technologies
Co., Ltd.
Shenzhen, Guangdong 518043 (CN)**

(72) Inventors:
• **HE, Yuhui
  Shenzhen, 518043 (CN)**
• **YE, Shuiyou
  Shenzhen, 518043 (CN)**
• **WEI, Lishun
  Shenzhen, 518043 (CN)**

(74) Representative: **Isarpatent
Patent- und Rechtsanwälte
Barth Hassa Peckmann & Partner mbB
Friedrichstraße 31
80801 München (DE)**

(54) **ELECTROMECHANICAL BRAKING SYSTEM WITH WEAR COMPENSATION AND VEHICLE**

(57)     This application provides an electromechanical braking system with wear compensation and a vehicle. The electromechanical braking system includes a caliper body, two friction plates, a gain bridge, a stud, and a drive apparatus, the gain bridge, one friction plate, the other friction plate, and the stud are arranged sequentially, the gain bridge is configured to movably connect the caliper body and the one friction plate, and the stud is configured to drivingly connect the caliper body and the other friction plate; the drive apparatus is configured to: drive the gain bridge and the one friction plate, and drive the stud and the other friction plate; and the drive apparatus is further configured to drive, through a unidirectional torque limiting apparatus, the stud to rotate relative to the caliper body along an axis of the stud. In this application, in the electromechanical braking system, a braking force gain and the wear compensation are decoupled through the unidirectional torque limiting apparatus, and the braking force gain and the wear compensation are decoupled to the two different friction plates, to improve reliability of the electromechanical braking system.

FIG. 2

EP 4 578 748 A1

## Description

## TECHNICAL FIELD

This application relates to the field of vehicle technologies, and in particular, to an electromechanical braking system with wear compensation and a vehicle.

## BACKGROUND

In an electromechanical braking (electromechanical brake, EMB) system, a brake motor and a mechanical drive mechanism are fitted together to drive a brake to perform braking. The electromechanical braking system features a simple structure, a sensitive response, a stable load transfer, no need to dispose a hydraulic pipeline, and the like, and has high transfer efficiency. The electromechanical braking system can improve safety, maneuverability, and comfort of a vehicle.

A braking force output by the brake motor and a braking stroke are relatively fixed. In some scenarios, the electromechanical braking system may be stuck or wear inside. Therefore, a gain mechanism may be disposed in the electromechanical braking system to adjust the braking force, and a wear compensation mechanism may be disposed to adjust the braking stroke. The gain mechanism and the wear compensation mechanism may be stacked on each other, resulting in a complex internal structure of the electromechanical braking system and energy flow crossing. This is not conducive to precision control of the electromechanical braking system, and increases manufacturing costs of the electromechanical braking system.

## SUMMARY

This application provides an electromechanical braking system with wear compensation and a vehicle, so that a braking force gain and wear compensation are decoupled to two different friction plates, to improve reliability of the electromechanical braking system. This application specifically includes the following solutions.

According to a first aspect, this application provides an electromechanical braking system. The electromechanical braking system includes a caliper body, two friction plates, a gain bridge, a stud, and a drive apparatus, the gain bridge, one friction plate, the other friction plate, and the stud are arranged sequentially, the gain bridge is configured to movably connect the caliper body and the one friction plate, and the stud is configured to drivingly connect the caliper body and the other friction plate; and the drive apparatus is configured to: drive the gain bridge and the one friction plate, and drive the stud and the other friction plate, and the drive apparatus is further configured to drive, through a unidirectional torque limiting apparatus, the stud to rotate relative to the caliper body along an axis of the stud.

In this application, the electromechanical braking system drives the gain bridge and drives the caliper body through the drive apparatus, so that the two friction plates slide relative to each other to implement braking. One friction plate is movably connected to the caliper body through the gain bridge, and the gain bridge is configured to increase a braking force in a braking process. The other friction plate is drivingly connected to the caliper body through the stud, and the drive apparatus further drives, through the unidirectional torque limiting apparatus, the stud to rotate to adjust a spacing between the two friction plates, to implement wear compensation. In this application, a braking force gain and wear compensation of the electromechanical braking system are respectively coupled to two different friction plates. There is a simple structure and high reliability, to ensure that the electromechanical braking system effectively provides a braking force.

In an implementation, the drive apparatus includes a cam, the cam is configured to abut and be arranged between the gain bridge and the caliper body, and the cam is configured to be drivingly connected to the stud through the unidirectional torque limiting apparatus.

In this implementation, the drive apparatus drives the gain bridge and the caliper body through the cam, to implement a braking function of the electromechanical braking system and provide the braking force gain. The cam further drives the stud through the unidirectional torque limiting apparatus, so that after wear occurs the stud is driven to rotate to implement the wear compensation.

In an implementation, a rotation axis of the cam intersects with the axis of the stud, and the drive apparatus includes a bevel gear assembly;

the cam coaxially drives an input gear of the bevel gear assembly through the unidirectional torque limiting apparatus; and
an axis of an output gear of the bevel gear assembly is parallel to an axial direction of the stud, and the output gear of the bevel gear assembly is configured to drive the stud to rotate.

In this implementation, the rotation axis of the cam needs to intersect with an arrangement direction of the two friction plates, to push the gain bridge to drive one friction plate. A rotation axis of the stud is parallel to the arrangement direction of the two friction plates, and the stud rotate to implement feeding of the wear compensation. The bevel gear assembly is configured to change rotation of the cam along the axis of the cam to rotation parallel to the axis of the stud, to implement a feeding action of the stud.

In an implementation, the drive apparatus includes a drive shaft and a drive wheel set, the drive shaft is configured to coaxially drive the output gear of the bevel gear assembly, and the drive wheel set is configured to drivingly connect the drive shaft and the stud;

an axis of the drive shaft is parallel to an arrangement direction of the two friction plates; and
along an axial direction of the drive shaft, the drive wheel set and the bevel gear assembly are respectively located on two sides of the two friction plates.

In this implementation, because the cam, the gain bridge, the one friction plate, the other friction plate, and the stud are arranged sequentially, rotational motion of the cam needs to be transferred to the stud located on the other side through the drive shaft across the two friction plates, to drive the stud on the other side to rotate to implement feeding.

In an implementation, the caliper body includes an accommodation cavity, the accommodation cavity is located on a side of the two friction plates that faces the stud and is configured to accommodate at least the drive wheel set, and the caliper body further includes a cover plate for shielding an opening of the accommodation cavity;

along the axial direction of the drive shaft, the cover plate is located on a side that is of the drive wheel set and that is away from the bevel gear assembly; and
the drive shaft includes an extension section, the extension section extends toward the cover plate, and a cross-sectional shape of the extension section is a hexagon.

In this implementation, the drive wheel set may be accommodated within the caliper body, to be sealed and protected. The extension section of the drive shaft toward the cover plate facilitates manual adjustment of a gap between the two friction plates and facilitates assembly and maintenance of the electromechanical braking system.

In an implementation, the electromechanical braking system includes two studs, the two studs are arranged at an interval along a radial direction of the two studs, and the drive apparatus drives the two studs to synchronously rotate through the unidirectional torque limiting apparatus.

In this implementation, the two studs may be disposed side by side along a length direction of the other friction plate, to stably push the other friction plate to implement feeding of the wear compensation.

In an implementation, the unidirectional torque limiting apparatus includes a unidirectional clutch and a torque limiter, and the drive apparatus is configured to be drivingly connected to the stud sequentially through the torque limiter and the unidirectional clutch;

the torque limiter is configured to rotate forward or backward along an axis of the torque limiter; and
the unidirectional clutch is configured to drive the stud to rotate forward with the torque limiter and is configured to limit the stud from rotating backward with the torque limiter.

In this implementation, the torque limiter may rotate with the cam and is driven or slips with a torque change of the cam, and the unidirectional clutch may synchronously rotate with the cam and drive the stud to unidirectionally rotate. Based on a driving characteristic of the unidirectional torque limiting apparatus, after wear occurs in the electromechanical braking system, the stud may unidirectionally rotate relative to the other friction plate to reduce a relative distance between the two friction plates, to implement a wear compensation function.

In an implementation, the torque limiter includes a driving member and a driven member that are coaxially driven, the driving member and the cam are coaxially driven, and the driven member and the unidirectional clutch are coaxially fastened; and
along an axial direction of the cam, a convex strip and a groove that fit each other are provided between the driving member and the cam, and the convex strip is embedded in the groove to implement coaxial driving of the cam and the driving member.

In this implementation, the convex strip is disposed on the driving member of the torque limiter and is embedded in the groove of the cam, or the convex strip is disposed on the cam and is embedded in the groove of the driving member of the torque limiter, so that the cam can drive the driving member of the torque limiter to coaxially rotate.

In an implementation, along a circumferential direction of the cam, a width size of the groove is greater than a width size of the convex strip, and after the cam rotates relative to the driving member by a preset angle, the convex strip and the groove are in contact with each other and coaxially rotate; and
a ratio, of the preset angle $\theta_0$ by which the cam rotates relative to the driving member, to a maximum rotation angle $\theta_{max}$ of the cam in a braking process meets a condition:

$$1:25 \leq \theta_0 : \theta_{max} \leq 1:5.$$

In this implementation, a gap is provided between the convex strip and the groove, so that the cam can push the two friction plates to slide relative to each other by a preset distance, and then drive the stud to rotate to implement the wear compensation. When the two friction plates slide relative to each other by the preset distance and are not in contact with a brake disc, it is determined that the friction plates wear, and the stud needs to be driven to rotate to perform wear compensation.

In an implementation, the torque limiter is a double-ratchet type torque limiter, a ball-ratchet type torque limiter, or a friction type torque limiter.

In an implementation, the unidirectional clutch is a ratchet-pawl clutch or an overrunning clutch.

In an implementation, the caliper body is provided with an accommodation groove, the cam and the gain bridge are located in the accommodation groove, the cam and the one friction plate are respectively arranged on two sides of the gain bridge along the axial direction of the stud, and the cam is configured to: rotate and abut against the gain bridge, and slide in the accommodation groove to push the one friction plate.

In this implementation, the caliper body accommodates the cam and the gain bridge in the accommodation groove, to protect the cam and the gain bridge. The cam drives the one friction plate to slide through the gain bridge, and the cam further drives the caliper body to drive the other friction plate to slide, so that the two friction plates slide relative to each other to brake the brake disc.

In an implementation, along the axial direction of the stud, the gain bridge includes a fastener, a roller, and a displacement member that are arranged sequentially, the fastener is configured to abut against the cam, the displacement member is fastened to the one friction plate, and the roller is located between the fastener and the displacement member; and

along the radial direction of the stud, the one friction plate is displaceable relative to the caliper body in the braking process, the displacement member is synchronously displaced with the one friction plate and reduces a spacing between the displacement member and the fastener, and the roller abuts between the fastener and the displacement member to increase a braking force.

In this implementation, the one friction plate drivingly connected to the gain bridge is further slidably connected to the caliper body along the radial direction of the stud, and the one friction plate is displaced relative to the caliper body in the braking process under a circumferential force of rotation of the brake disc, and drives the displacement member to displace relative to the fastener to reduce the spacing between the displacement member and the fastener. The roller is squeezed by the fastener and the displacement member to generate a reverse thrust, to increase pressure between the brake disc and the two friction plates to implement a braking force gain.

In an implementation, along the radial direction of the stud, a length size of the displacement member is less than a length size of the accommodation groove.

In this implementation, the gain bridge is partially accommodated in the accommodation groove provided in the caliper body, and moves synchronously against the caliper body in a movement process. The displacement member protrudes out of the accommodation groove, and is configured to be connected to the one friction plate. The accommodation groove controls a displacement distance of the one friction plate relative to the caliper body by limiting a displacement distance of the displacement member.

In an implementation, the fastener is provided with a first V-shaped notch toward the displacement member, the displacement member is provided with a second V-shaped notch toward the fastener, the first V-shaped notch is aligned with the second V-shaped notch along the axial direction of the stud, and when the displacement member is synchronously displaced with the one friction plate, the first V-shaped notch is driven to offset relative to the second V-shaped notch, to reduce the spacing between the displacement member and the fastener.

In this implementation, the V-shaped notches that are provided on the fastener and the displacement member and that are opposite to each other may implement positioning of the roller, and the two V-shaped notches are fitted together to form two groups of slopes, to allow the displacement member to squeeze the roller by sliding leftward or rightward relative to the fastener, to implement a braking force gain. In this application, the electromechanical braking system is applicable to both a left wheel and a right wheel of a vehicle.

In an implementation, the fastener is provided with at least two first V-shaped notches, and the at least two first V-shaped notches are arranged at an interval along the radial direction of the stud;

the displacement member is provided with second V-shaped notches with a same quantity as the first V-shaped notches, and each second V-shaped notch is aligned with one first V-shaped notch along the axial direction of the stud; and
one roller is disposed between the first V-shaped notch and the second V-shaped notch that are aligned with each other.

In this implementation, a plurality of groups including first V-shaped notches, second V-shaped notches, and rollers are arranged at an interval along a displacement direction of the displacement member, and pressure transferred by a braking force gain mechanism to the friction plate is more uniform, to improve a braking force gain.

In an implementation, the roller is cylindrical, and an axis of the roller is perpendicular to the axial direction of the stud, and is also perpendicular to a displacement direction of the one friction plate relative to the caliper body in the braking process.

In this implementation, the roller is disposed to be cylindrical, and the axis of the roller is parallel to a length direction of the V-shaped notch, to increase a contact area between the roller and each of the displacement member and the fastener, so that the roller better abuts between the displacement member and the fastener, and more uniform braking force gain pressure is provided for the friction plate.

In an implementation, the drive apparatus includes a brake motor and a drive mechanism, and the brake motor is fastened to the caliper body and drives, through the drive mechanism, the cam to rotate;

along the axial direction of the stud, the brake motor is located on a side that is of the caliper body and that is away from the friction plate, and a motor shaft of the brake motor is perpendicular to the axial direction of the stud; and

an input member of the drive mechanism is drivingly connected to the brake motor, an output member of the drive mechanism and the cam are coaxially fastened, and the input member of the drive mechanism drives the output member to drive the cam to rotate.

In this implementation, the brake motor is configured to provide the braking force, and an arrangement manner of the brake motor can reduce an outline dimension of the electromechanical braking system along the axial direction of the stud, to save wheel end space. The drive mechanism is configured to transfer, to the cam, a driving force provided by the brake motor, to drive the cam to rotate.

According to a second aspect, this application provides a vehicle, including a wheel and the electromechanical braking system provided in any one of the foregoing implementations. An axial direction of a stud in the electromechanical braking system is approximately parallel to a rotation shaft of a brake disc of the wheel.

The vehicle provided in the second aspect of this application is braked through the electromechanical braking system provided in the first aspect of this application. In the electromechanical braking system provided in the first aspect of this application, the braking force gain mechanism and a wear compensation mechanism are respectively coupled to the two friction plates, to implement energy distribution, so that reliability in a braking process of the vehicle in this application can be improved.

**BRIEF DESCRIPTION OF DRAWINGS**

To describe the technical solutions in this application more clearly, the following briefly describes the accompanying drawings required for describing the implementations. Clearly, the accompanying drawings in the following description show merely some implementations of this application, and a person of ordinary skill in the art may still derive other drawings from these accompanying drawings without creative efforts.

FIG. 1 is a diagram of a working scenario of an electromechanical braking system in a vehicle according to an embodiment of this application;
FIG. 2 is a diagram of an outline structure of an electromechanical braking system according to an embodiment of this application;
FIG. 3 is a diagram of a decomposed structure of an electromechanical braking system according to an embodiment of this application;
FIG. 4 is a diagram of a lateral structure of an electromechanical braking system according to an embodiment of this application;
FIG. 5 is a diagram of a fitting structure of a gain bridge and a first friction plate in an electromechanical braking system according to an embodiment of this application;
FIG. 6 is a diagram of a decomposed structure of a gain bridge in an electromechanical braking system according to an embodiment of this application;
FIG. 7 is a diagram of a working principle of a gain bridge in an electromechanical braking system according to an embodiment of this application;
FIG. 8 is a diagram of an internal structure of a main body portion of a caliper body in an electromechanical braking system according to an embodiment of this application;
FIG. 9 is a diagram of a structure of a torque limiter being a ball-ratchet type torque limiter in an electromechanical braking system according to an embodiment of this application;
FIG. 10 is a diagram of a partial structure of an electromechanical braking system when braking starts according to an embodiment of this application;
FIG. 11 is a diagram of a partial structure of an electromechanical braking system in a braking process according to an embodiment of this application;
FIG. 12 is a diagram of a structure of a torque limiter being a friction type torque limiter in an electromechanical braking system according to an embodiment of this application;
FIG. 13 is a diagram of a structure of a torque limiter being a double-ratchet type torque limiter in an electromechanical braking system according to an embodiment of this application;
FIG. 14 is a diagram of a structure of a fitting state of a double-ratchet type torque limiter in an electromechanical braking system according to an embodiment of this application;
FIG. 15 is a diagram of a structure of a unidirectional clutch in an electromechanical braking system according to an embodiment of this application;
FIG. 16 is a diagram of a structure of a unidirectional clutch being an overrunning clutch in an electromechanical braking system according to an embodiment of this application;
FIG. 17 is a diagram of an outline structure of a cam in an electromechanical braking system according to an embodiment of this application;
FIG. 18 is a diagram of an internal structure of a caliper body in an electromechanical braking system according to an embodiment of this application;
FIG. 19 is a diagram of an internal structure of a caliper body in an electromechanical braking system from another perspective according to an embodiment of this application;
FIG. 20 is a diagram of a decomposed structure of a brake motor and a caliper body in an electromechanical braking system according to an embodiment of this application; and
FIG. 21 is a diagram of a driving path in an electromechanical braking system according to an embodiment of this application.

## DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In this specification, the sequence numbers, such as "first" and "second", of components are merely intended to distinguish between the described objects, and do not have any sequential or technical meaning. Unless otherwise specified, the "connection" in this application includes a direct connection and an indirect connection. In descriptions of this application, it should be understood that orientation or position relationships indicated by the terms "above", "below", "front", "back", "top", "bottom", "inside", "outside", and the like are based on orientation or position relationships shown in the accompanying drawings, and are merely intended for ease of describing this application and simplifying descriptions, rather than indicating or implying that a described apparatus or element needs to have a specific orientation or needs to be constructed and operated in a specific orientation. Therefore, such terms shall not be understood as a limitation on this application.

In this application, unless otherwise specified and limited, that a first feature is "above" or "below" a second feature may be that the first feature is in direct contact with the second feature, or the first feature is in indirect contact with the second feature via an intermediate medium. In addition, that the first feature is "on the top of' and "above" the second feature may be that the first feature is right above or obliquely above the second feature, or merely mean that a horizontal height of the first feature is higher than a horizontal height of the second feature. That the first feature is "below" or "under" the second feature may be that the first feature is right below or obliquely below the second feature, or merely mean that a horizontal height of the first feature is less than a horizontal height of the second feature.

This application provides an electromechanical braking system with wear compensation. The electromechanical braking system includes a caliper body, two friction plates, a gain bridge, a stud, and a drive apparatus, the gain bridge, one friction plate, the other friction plate, and the stud are arranged sequentially, the gain bridge is configured to movably connect the caliper body and the one friction plate, and the stud is configured to drivingly connect the caliper body and the other friction plate; and the drive apparatus is configured to: drive the gain bridge and the one friction plate, and drive the stud and the other friction plate, and the drive apparatus is further configured to drive, through a unidirectional torque limiting apparatus, the stud to rotate relative to the caliper body along an axis of the stud.

In this application, in the electromechanical braking system, a braking force gain and the wear compensation are decoupled through the unidirectional torque limiting apparatus, and the braking force gain and the wear compensation are decoupled to the two different friction plates, to improve reliability of the electromechanical braking system.

This application provides a vehicle, including a wheel and the foregoing electromechanical braking system. An axial direction of a stud in the electromechanical braking system is approximately parallel to a rotation shaft of a brake disc of the wheel. In this way, braking reliability of the vehicle in this application is high.

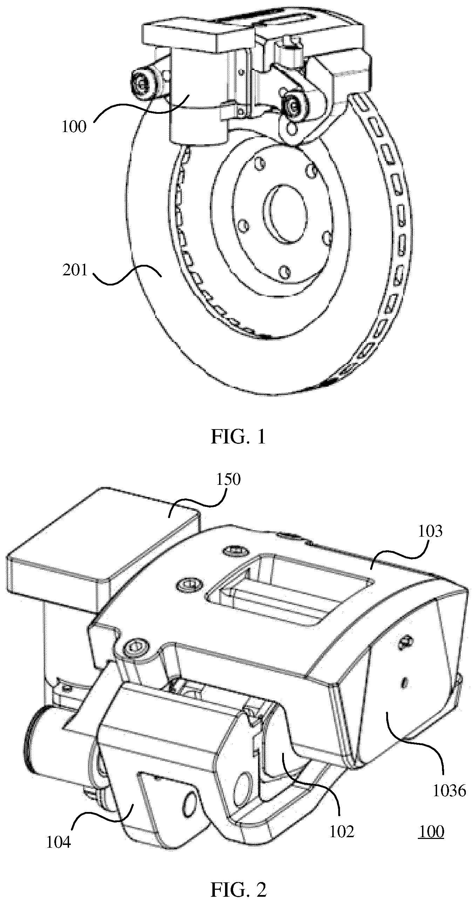

FIG. 1 is a diagram of a working scenario of an electromechanical braking system 100 in a vehicle according to this application.

As shown in FIG. 1, the electromechanical braking system 100 with wear compensation provided in this application is disposed at a wheel of the vehicle, and is specifically disposed in a correspondence with a brake disc 201 of the wheel. The electromechanical braking system 100 includes a caliper holder 104 and a brake assembly. The caliper holder 104 is fastened to a frame of the vehicle and is close to the brake disc 201. In a traveling process of the vehicle, the brake disc 201 rotates with the wheel, and the caliper holder 104 is fastened relative to the frame, so that the brake disc 201 rotates relative to the caliper holder 104.

The brake assembly is connected to the caliper holder 104, and the brake assembly may slide relative to the caliper holder 104 (namely, the frame) through an action of an internal mechanism. In addition, a sliding direction of the internal mechanism of the brake assembly relative to the caliper holder 104 is parallel to an axial direction of the brake disc 201. The brake assembly is in contact with the brake disc 201 by sliding relative to the caliper holder 104 through the action of the internal mechanism, to form a friction force, and further implement a braking action by braking the brake disc 201.

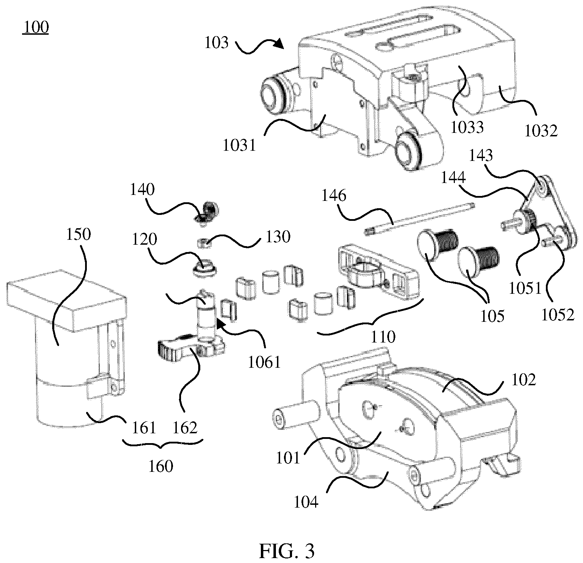

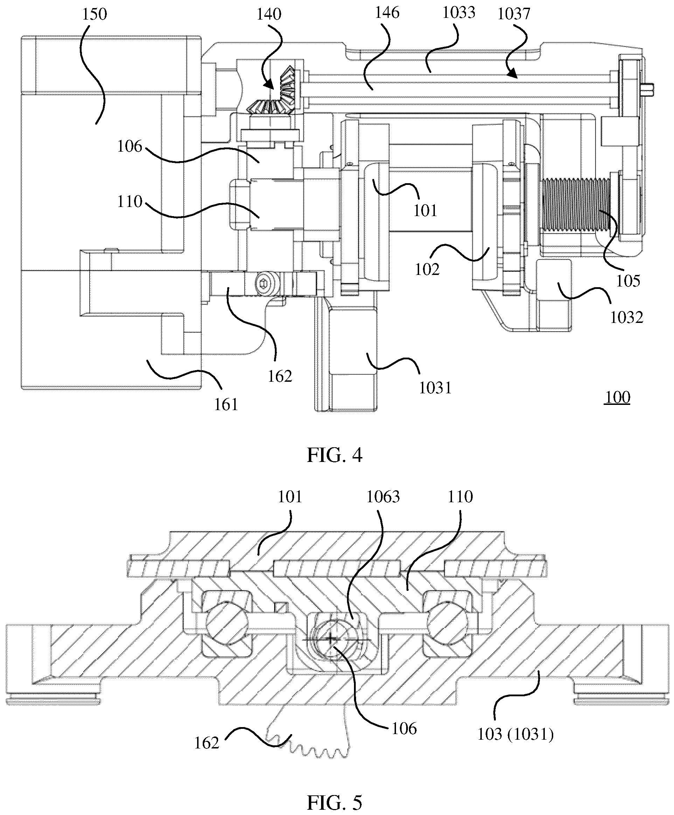

FIG. 2 is a diagram of an outline structure of an electromechanical braking system 100 according to this application. FIG. 3 is a diagram of a decomposed structure of an electromechanical braking system 100. FIG. 4 is a diagram of a lateral structure of an electromechanical braking system 100.

As shown in FIG. 2 and FIG. 3, a brake assembly in the electromechanical braking system 100 in this application includes a caliper body 103 and two friction plates (defined as a first friction plate 101 and a second friction plate 102 in this embodiment), a gain bridge 110, and a stud 105. The caliper body 103 serves as a main structure of the brake assembly, and is slidably connected to a caliper holder 104. The caliper body 103 may drive the two friction plates, the gain bridge 110, and the stud 105 to slide synchronously relative to the caliper holder 104. Inside the caliper body 103, the gain bridge 110, the first friction plate 101, the second friction plate 102, and the stud 105 are arranged sequentially in a same direction. An arrangement direction of the components in the caliper body 103 is approximately parallel to a sliding direction of the caliper body 103 relative to the caliper holder 104.

The gain bridge is configured to movably connect the first friction plate 101 and the caliper body 103, and the gain bridge 110 is configured to drive the first friction plate 101 to slide relative to the caliper body 103. The stud 105 is configured to drivingly connect the caliper body 103 and the second friction plate 102, and the stud 105 is configured to be threadly connected to the caliper body 103.

The first friction plate 101 and the second friction plate 102 are arranged at an interval. An arrangement direction of the two friction plates is approximately parallel to a rotation axis of a brake disc 201. The first friction plate 101 and the second friction plate 102 are respectively arranged on two sides of the brake disc 201 along a direction of the rotation axis of the brake disc 201, and the gain bridge 110 and the stud 105 are located on the two sides of the two friction plates along the direction of the rotation axis of the brake disc 201. An axis of the stud 105 is approximately parallel to the arrangement direction of the two friction plates.

The first friction plate 101 is drivingly connected to the caliper body 103 through the gain bridge 110, and the first friction plate 101 is located between the caliper body 103 and the brake disc 201. The second friction plate 102 is drivingly connected to the caliper body 103, and the stud 105 is located between the second friction plate 102 and the caliper body 103. The first friction plate 101 may slide relative to the caliper body 103 and approach the brake disc 201, and the second friction plate 102 approaches the brake disc 201 with sliding of the caliper body 103 and the stud 105.

In the electromechanical braking system 100 in this application, the brake assembly drives the first friction plate 101 to slide relative to the caliper body 103, and drives the caliper body 103 to slide toward the brake disc 201, so that the first friction plate 101 and the second friction plate 102 get close to each other and are in contact with the brake disc 201. The two friction plates form friction forces on the two sides of the brake disc 201, to implement braking of the brake disc 201.

As shown in FIG. 4, the caliper body 103 is approximately U-shaped, and the caliper body 103 includes a main body portion 1031, a push portion 1032, and a connecting portion 1033. The main body portion 1031 and the push portion 1032 are respectively arranged on the two sides of the two friction plates along an axial direction of the brake disc 201. The main body portion 1031, the gain bridge 110, the first friction plate 101, the second friction plate 102, the stud 105, and the push portion 1032 are arranged sequentially along the axial direction of the brake disc 201. The connecting portion 1033 is located on an outer side of the brake disc 201 along a radial direction of the brake disc 201, and the connecting portion 1033 is configured to fasten the main body portion 1031 and the push portion 1032.

The main body portion 1031 is configured to be slidably connected to the caliper holder 104. The main body portion 1031 is further configured to be fastened to a drive apparatus of the electromechanical braking system 100. The drive apparatus is drivingly connected to the gain bridge 110, and the drive apparatus is configured to drive the gain bridge 110 and the caliper body 103 to respectively drive the two friction plates to slide relative to each other. The push portion 1032 is configured to be threadly connected to the stud 105. The other end of the stud 105 is configured to abut against the second friction plate 102. The drive apparatus is further configured to drive, through the unidirectional torque limiting apparatus, the stud 105 to rotate relative to the caliper body 103 (the push portion 1032) along an axial direction of the stud 105.

It may be understood that, when the stud 105 rotates relative to the caliper body 103, displacement is generated due to rotation of the stud 105 relative to the caliper body 103 along the axial direction of the stud 105. Therefore, a spacing between the second friction plate 102 and the caliper body 103 is changed.

For example, when the stud 105 rotates forward, the caliper body 103 gradually protrudes out in a direction in which the stud 105 faces the second friction plate 102, a spacing between the second friction plate 102 and the push portion 1032 is increased, and the second friction plate 102 moves in a direction closer to the brake disc 201. When the stud 105 rotates backward, the caliper body 103 is retracted in a direction in which the stud 105 faces away from the second friction plate 102, the spacing between the second friction plate 102 and the caliper body 103 is reduced, and the second friction plate 102 moves in a direction away from the brake disc 201. It may be understood that, when the two friction plates wear, a spacing between the second friction plate 102 and the brake disc 201 is increased, and the stud 105 needs to be driven to rotate forward to push the second friction plate 102 to move toward the brake disc 201, to implement wear compensation.

In some other embodiments, a thread rotation direction of the stud 105 may alternatively be set in a reverse direction, so that the spacing between the second friction plate 102 and the push portion 1032 is reduced when the stud 105 rotates forward, and the spacing between the second friction plate 102 and the push portion 1032 is increased when the stud 105 rotates backward. In this case, the stud 105 needs to rotate backward, to form wear compensation.

FIG. 5 is a diagram of a fitting structure of a gain bridge 110 and a first friction plate 101.

In an embodiment, the drive apparatus includes a cam 106. The cam 106 is configured to abut and be arranged between the gain bridge 110 and the caliper body 103 (main body portion 1031), and the cam 106 is configured to be drivingly connected to the stud 105 through the unidirectional torque limiting apparatus. Specifically, the cam 106 is rotatably connected to the caliper body 103, and the gain bridge 110 is drivingly connected between the caliper body 103 and the first friction plate 101. The cam 106 may rotate relative to the caliper body 103, and push the gain bridge 110 and the first friction plate 101 to slide relative to the caliper body 103. In other words, the caliper body 103 is drivingly connected to the first friction plate 101 through the cam 106 and the gain bridge 110.

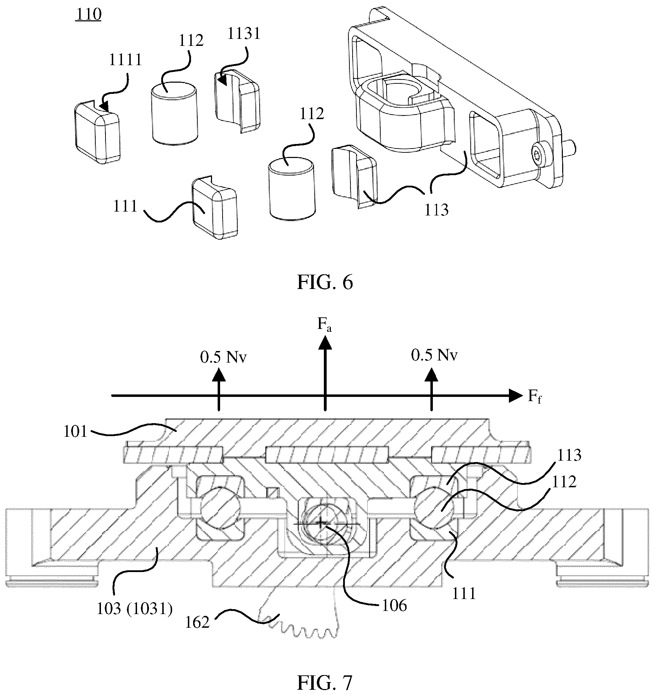

The gain bridge 110 abuts between the cam 106 and the first friction plate 101, and is configured to increase a braking force of the electromechanical braking system 100. Specifically, as shown in FIG. 6, in an embodiment, the gain bridge 110 includes a fastener 111, a roller 112, and a displacement member 113. The fastener 111, the roller 112, and the displacement member 113 are arranged sequentially along the axial direction of the stud 105. The fastener 111 is configured to abut against the cam 106, the displacement member 113 is fastened to the first friction plate 101, and the roller 112 is located between the fastener 111 and the displacement member 113.

An eccentric portion 1061 of the cam 106 is in contact with and abuts against the fastener 111. When the cam 106 rotates relative to the caliper body 103, the eccentric portion 1061 abuts against the fastener 111 and slides toward the brake disc 201. The fastener 111 drives the gain bridge 110 to slide toward the brake disc 201 as a whole, and drives the first friction plate 101 to synchronously slide toward the brake disc 201. The first friction plate 101 is in contact with an end face of the brake disc 201, to form a friction force to brake the brake disc 201.

Further, based on a structure of the gain bridge 110, along the axial direction of the stud 105, the first friction plate 101 may be displaced relative to the caliper body 103 in a braking process. After the first friction plate 101 is in contact with the brake disc 201, a circumferential force of rotation of the brake disc 201 reversely acts on the first friction plate 101, and drives the first friction plate 101 to be displaced along a tangential direction (a radial direction of the stud 105) of the brake disc 201. The first friction plate 101 is fastened to the displacement member 113, the first friction plate 101 drives the displacement member 113 to be synchronously displaced, and the displacement member 113 is displaced relative to the fastener 111 along a direction perpendicular to the arrangement direction of the two friction plates (the radial direction of the stud 105).

The displacement member 113 and the fastener 111 are provided with slopes that fit each other. In a process in which the displacement member 113 is displaced relative to the fastener 111, the two slopes that fit each other also move relative to each other, and a spacing between the displacement member 113 and the fastener 111 along the axial direction of the stud 105 is reduced. The roller 112 is located between the two slopes that fit each other, and the roller 112 forms an abutting force on each of the fastener 111 and the displacement member 113 because the spacing between the fastener 111 and the displacement member 113 is reduced, and further separately abuts against the fastener 111 and the displacement member 113 to move in a direction toward the caliper body 103 and the first friction plate 101.

Because the cam 106 is rotatably connected to the caliper body 103, and the cam 106 abuts against the fastener 111, an abutting force generated by the roller 112 acts on the first friction plate 101 through the displacement member 113, to further increase contact pressure between the first friction plate 101 and the brake disc 201, and increase a friction force between the first friction plate 101 and the brake disc 201. It may be understood that the friction force between the first friction plate 101 and the brake disc 201 is the braking force of the electromechanical braking system 100. In other words, the structure of the gain bridge 110 may increase the braking force of the electromechanical braking system 100.

It should be noted that power that is of the gain bridge 110 and that is used to increase the braking force comes from the friction force between the brake disc 201 and the first friction plate 101. In other words, when the gain bridge 110 implements a braking force gain, the brake disc 201 has been in contact with the first friction plate 101. Inside the gain bridge 110, the fastener 111, the roller 112, and the displacement member 113 also maintain a state of being in contact with each other. In some scenarios, a displacement amount of the displacement member 113 relative to the fastener 111 may be small, or there is only a displacement trend. The first friction plate 101 is subject to the friction force of the brake disc 201 to form a pulling force to drive the displacement member 113 to be displaced, and the pulling force is transferred by the gain bridge 110 by using a force of the internal mechanism, to form an abutting force and increase the friction force between the first friction plate 101 and the brake disc 201. It may also be explained as that, after the gain bridge 110 is subject to the pulling force of the first friction plate 101, no relative displacement may be generated inside the gain bridge 110, and a thrust on the first friction plate 101 may also be formed only by increasing mutual pressure between components, to implement the braking force gain.

FIG. 7 is a diagram of a working principle of a gain bridge 110. As shown in FIG. 7, it is defined as follows: a total braking force of the electromechanical braking system 100 is N, a braking force gain provided by the gain bridge 110 is Nv, an included angle between a horizontal direction and the slopes of the fastener 111 and the displacement member 113 is $\gamma$, and a friction coefficient between the first friction plate 101 and the brake disc 201 is $\mu$, and it can be calculated that a braking force gain ratio K of the gain bridge 110 is:

$$K = \frac{N}{F_a} = \frac{\tan\gamma}{\tan\gamma - \mu},$$

where

$$N = N_v + F_a;$$

and

$$F_f = \mu * N.$$

It may be understood that $F_a$ is an original braking force of the electromechanical braking system 100, and $F_f$ is a friction force that is of the electromechanical braking system 100 and that acts on the brake disc 201. A structure of two groups including fasteners 111, rollers 112, and displacement members 113 is included in the figure. A braking force gain provided by a single group including a fastener 111, a roller 112, and a displacement member 113 is 0.5Nv.

In an embodiment, the caliper body 103 is provided with an accommodation groove 1034. The accommodation groove 1034 is located at the main body portion 1031 of the caliper body 103. The cam 106 and the gain bridge 110 are located in the accommodation groove 1034. The cam 106 and the first friction plate 101 are respectively arranged on two sides of the gain bridge 110 along the axial direction of the stud 105, and the cam 106 is configured to: rotate and abut against the gain bridge 110, and slide in the accommodation groove 1034 to push the first friction plate 101.

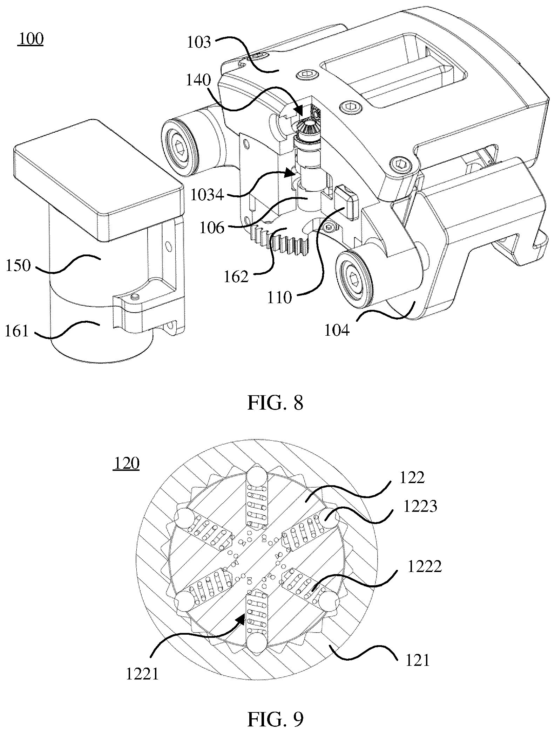

The gain bridge 110 is partially accommodated in the accommodation groove 1034. Specifically, as shown in FIG. 8, the fastener 111 and the roller 112 of the gain bridge 110 are accommodated in the accommodation groove 1034, and a part of the displacement member 113 is accommodated in the accommodation groove 1034. The other part of the displacement member 113 is located outside the accommodation groove 1034, and is fastened to the first friction plate 101.

In a direction in which the displacement member 113 is synchronously displaced with the first friction plate 101 (namely, in the direction perpendicular to the arrangement direction of the two friction plates), a length size of the displacement member 113 is less than a length size of the accommodation groove 1034. In this case, the accommodation groove 1034 may partially accommodate the gain bridge 110, and simultaneously the gain bridge 110 is allowed to be displaced with the first friction plate 101 relative to the caliper body 103, to increase the braking force of the electromechanical braking system 100. On the contrary, the accommodation groove 1034 may also be configured to limit a displacement distance of the displacement member 113, to limit the first friction plate 101, and avoid excessive displacement of the first friction plate 101 relative to the caliper body 103 under the friction force of the brake disc 201.

In an embodiment, the fastener 111 is provided with a first V-shaped notch 1111 toward the displacement member 113, and the displacement member 113 is provided with a second V-shaped notch 1131 toward the fastener 111. Along the axial direction of the stud 105, the first V-shaped notch 1111 and the second V-shaped notch 1131 are arranged in alignment, and the slopes that are of the fastener 111 and the displacement member 113 and that fit each other are two end faces that are of the first V-shaped notch 1111 and the second V-shaped notch 1131 and that are parallel to each other. It may be understood that, when the displacement member 113 is synchronously displaced with the first friction plate 101, the first V-shaped notch 1111 is driven to offset relative to the second V-shaped notch 1131, and a distance between the two end faces that are parallel to each other is reduced, to reduce the spacing between the displacement member 113 and the fastener 111.

The first V-shaped notch 1111 and the second V-shaped notch 1131 that are aligned with each other further form accommodating space, and the roller 112 may be accommodated in the accommodating space, to implement positioning. The first V-shaped notch 1111 and the second V-shaped notch 1131 have two pairs of end faces that are parallel to each other. When the displacement member 113 is displaced toward any direction with the first friction plate 101, a spacing between the two pairs of end faces that are parallel to each other is reduced. Therefore, the displacement member 113 may be displaced along any side perpendicular to the two friction plates, to squeeze the roller 112 and increase the braking force.

In other words, for the first friction plate 101, a tangential force that is of the brake disc 201 and to which the first friction plate 101 is subject may extend leftward or rightward along a direction perpendicular to the two friction plates, without affecting the braking force gain of the gain bridge 110. Based on such a setting, the electromechanical braking system 100 in this application is applicable to both a left wheel and a right wheel of the vehicle, and an installation direction of the electromechanical braking system or an internal structure of the gain bridge 110 does not need to be adjusted based on a wheel direction. This facilitates vehicle assembly and improves vehicle maintainability.

In the electromechanical braking system 100 in this application, the fastener 111, the roller 112, and the displacement member 113 need to be fitted in groups, to implement the braking force gain. However, in the direction perpendicular to the arrangement direction of the two friction plates (the radial direction of the stud 105), a plurality of groups including fasteners 111, rollers 112, and displacement members 113 that fit each other may be disposed. To be specific, in an embodiment, the fastener 111 is provided with at least two first V-shaped notches 1111, and the first V-shaped notches 1111 are arranged at an interval along the direction perpendicular to the arrangement direction of the two friction plates (the radial direction of the stud 105). Correspondingly, the displacement member 113 is provided with second V-shaped notches 1131 with a same quantity as the first V-shaped notches 1111, and each second V-shaped notch 1131 is aligned with one first V-shaped notch 1111 along the arrangement direction of the two friction plates (the axial direction of the stud 105). One roller 112 is disposed between the first V-shaped notch 1111 and the second V-shaped notch 1131 that are aligned with each other. In other words, one group including a fastener 111, a roller 112, and a displacement member 113 that fit each other is formed.

The plurality of groups including fasteners 111, rollers 112, and displacement members 113 that fit each other are disposed, so that an abutting force of the gain bridge 110 on the first friction plate 101 is relatively evenly distributed, and pressure that is of the first friction plate 101 and that acts on the brake disc 201 is also relatively balanced. Therefore, a more stable braking friction force is obtained, and a better braking force gain is formed.

In the structure shown in the figure, the fastener 111 may include a plurality of block parts having a first V-shaped notch 1111. The plurality of block parts are respectively fastened on the caliper body 103. The displacement member 113 may include a frame and a plurality of block parts having a second V-shaped notch 1131. The plurality of block parts of the displacement member 113 are slidably connected to the frame separately, and are aligned with block parts of the fastener 111 one by one. The fastener 111 and the displacement member 113 are separately split into a form of a combination of the plurality of block parts, to reduce overall processing costs of the gain bridge 110.

In an embodiment, the roller 112 may be cylindrical. An axis of the roller 112 is perpendicular to the arrangement direction of the two friction plates (the radial direction of the stud 105), and is also perpendicular to a displacement direction (the axial direction of the stud 105) of the first friction plate 101 relative to the caliper body 103 in the braking process. Therefore, the axis of the cylindrical roller 112 is parallel to length directions of the first V-shaped notch 1111 and the second V-shaped notch 1131, and a contact area between the roller 112 and each of the first V-shaped notch 1111 and the second V-shaped notch 1131 are relatively increased, so that the roller 112 can better abut against the displacement member 113 and the fastener 111, and gain pressure that is of the gain bridge 110 and that acts on the first friction plate 101 becomes more balanced.

On one side of the stud 105, based on the foregoing description, a spacing between the second friction plate 102 and the caliper body 103 may be adjusted through rotation of the stud 105. In this application, the brake assembly of the electromechanical braking system 100 further includes the unidirectional torque limiting apparatus, and the drive apparatus is configured to drive the unidirectional torque limiting apparatus to drive the stud 105 to rotate relative to the caliper body 103 along the axis of the stud 105. Specifically, the cam 106 is configured to be drivingly connected to the stud 105 through the unidirectional torque limiting apparatus.

In an embodiment, the unidirectional torque limiting apparatus includes a torque limiter 120 and a unidirectional clutch 130. The drive apparatus is configured to be drivingly connected to the stud 105 sequentially through the torque limiter 120 and the unidirectional clutch 130. The torque limiter 120 is configured to rotate forward or backward along an axis of the torque limiter 120, and the unidirectional clutch 130 is configured to drive the stud 105 to rotate forward with the torque limiter 120 (the stud 105 rotates forward to drive the second friction plate 102 to move toward the brake disc 201 to implement wear compensation). The unidirectional clutch 130 is further configured to limit the stud 105 to rotate backward with the torque limiter 120.

Specifically, the torque limiter 120 is drivingly connected between the cam 106 and the stud 105. When the cam 106 rotates relative to the caliper body 103, the torque limiter 120 may drive the stud 105 to synchronously rotate relative to the caliper body 103. In this case, the stud 105 rotates relative to the caliper body 103, to adjust the spacing between the second friction plate 102 and the caliper body 103.

In an embodiment, the torque limiter 120 and the cam 106 are coaxially driven. The torque limiter 120 may be a double-ratchet type torque limiter, a ball-ratchet type torque limiter, or a friction type torque limiter. FIG. 9 shows a working principle of a ball-ratchet type torque limiter. The torque limiter 120 shown in FIG. 9 specifically includes a driving member 121 and a driven member 122. The driving member 121 and the cam 106 are coaxially driven, and the driven member 122 and the stud 105 are drivingly connected.

The driving member 121 is sleeved on a periphery of the driven member 122, an inner circumferential surface of the driving member 121 is provided with a ratchet structure in an annular arrangement, a via hole 1221 is provided in the driven member 122, and the via hole 1221 extends toward the driving member 121 along a radial direction of the driven member 122. A plurality of via holes 1221 are arranged along a circumferential direction of the driven member 122.

Springs 1222 and balls 1223 that fit each other in a one-to-one manner are all provided inside the via holes 1221. Along the radial direction of the driven member 122, the spring 1222 is closer to a rotation center of the driven member 122 than the ball 1223, and the ball 1223 is close to the ratchet structure on the inner circumferential surface of the driving member 121. The spring 1222 is configured to push the ball 1223 to slide toward the ratchet structure on the inner circumferential surface of the driving member 121.

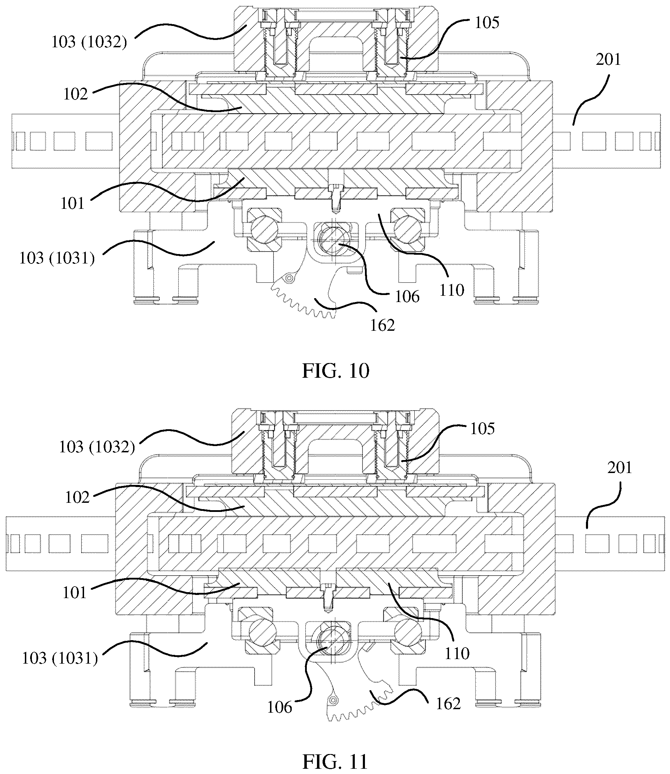

As shown in FIG. 10, when the electromechanical braking system 100 starts braking, the cam 106 rotates relative to the caliper body 103, and pushes the first friction plate 101 to slide toward the brake disc 201. Before the first friction plate 101 is in contact with the brake disc 201, the driving member 121 of the torque limiter 120 may synchronously rotate with the cam 106. In this case, because the first friction plate 101 is not in contact with the brake disc 201, a torque borne by the cam 106 is small. In a process in which the driving member 121 rotates with the cam 106, the spring 1222 may abut against the ball 1223 and be in contact with the ratchet structure on the inner circumferential surface of the driving member 121. The driving member 121 pushes, by using the ratchet structure on the inner circumferential surface, the ball 1223 to synchronously rotate, and drives the driven member 122 to synchronously rotate with the driving member 121.

As shown in FIG. 11, after the cam 106 rotates by a preset angle, the first friction plate 101 is in contact with the brake disc 201. Then, if the cam 106 further rotates, pressure between the first friction plate 101 and the brake disc 201 is to be increased. The pressure causes a relative increase in the torque borne by the cam 106, and the driving member 121 is synchronously increased with a rotation torque of the cam 106. In this case, an elastic force provided by the spring 1222 no longer supports the ball 1223 to rotate with the ratchet mechanism on the inner circumferential surface of the driving member 121, the ball 1223 and a ratchet on the inner circumferential surface of the driving member 121 start to slip, the driving member 121 and the driven member 122 no longer fitted for synchronous rotation, the cam 106 continues to rotate relative to the caliper body 103 to implement braking, and the stud 105 is in a relatively static state relative to the caliper body 103.

In other words, the torque limiter 120 is configured to: in the braking process of the electromechanical braking system 100, based on different torques borne by the cam 106, implement driving of the cam 106 and the stud 105, or implement slipping and decoupling of the cam 106 and the stud 105. When the cam 106 and the stud 105 are drivingly connected through the torque limiter 120, the stud 105 may rotate relative to the caliper body 103 under the driving of the cam 106, and the spacing between the second friction plate 102 and the caliper body 103 is adjusted.

It may be understood that, the first friction plate 101 and the second friction plate 102 each are worn by the brake disc 201 in a process of working for a long period of time. The first friction plate 101 and the second friction plate 102 that wear are thinner, and a distance between the brake disc 201 and each of the first friction plate 101 and the second friction plate 102 are correspondingly increased. In each braking process, strokes that the first friction plate 101 and the second friction plate 102 need to slide to be in contact with the brake disc 201 are increased, causing a braking delay of the electromechanical braking system 100. In addition, when the first friction plate 101 and the second friction plate 102 slide a same distance in the braking process, contact pressure between the brake disc 201 and each of the first friction plate 101 and the second friction plate 102 is reduced, causing an insufficient braking force.

In this application, in the electromechanical braking system 100, the cam 106 drives the stud 105 to rotate, so that the spacing between the second friction plate 102 and the caliper body 103 can be adjusted, and further, the spacing between the first friction plate 101 and the second friction plate 102 is adjusted. The brake disc 201 is located between the first friction plate 101 and the second friction plate 102, and a distance by which the first friction plate 101 and/or the second friction plate 102 slide/slides to be in contact with the brake disc 201 is correspondingly adjusted, to form wear compensation for the electromechanical braking system 100.

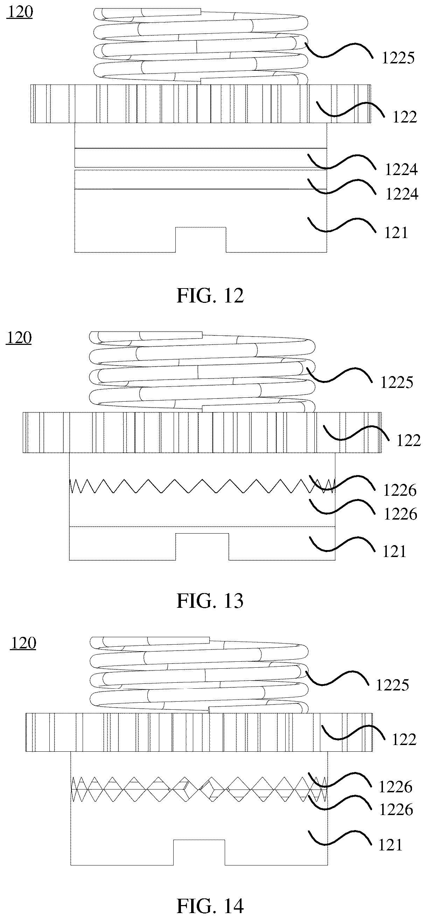

It should be noted that in the conventional technology, many structures can implement functions of the torque limiter 120, and an implementation of the torque limiter 120 is not limited to the ball-ratchet type torque limiter shown in FIG. 9. As shown in FIG. 12, the torque limiter 120 may alternatively be a friction type torque limiter. Two friction wheels 1224 fit each other. When the torque is small, the two friction wheels 1224 coaxially rotate through a friction force, so that the driving member 121 and the driven member 122 on two sides of the friction wheels synchronously rotate. When the torque is large, the two friction wheels 1224 start to slip, and the driving member 121 and the driven member 122 slip. A thrust of mutual abutting and friction may be further provided between the two friction wheels 1224 through a compression spring 1225.

FIG. 13 and FIG. 14 show working modes of a double-ratchet type torque limiter. In the double-ratchet type torque limiter, two ratchets 1226 that are engaged with each other are fitted together. When the torque is small, the two ratchets 1226 are engaged with each other and coaxially rotate (as shown in FIG. 13), so that the driving member 121 and the driven member 122 on two sides of the ratchets 1226 synchronously rotate. When the torque is large, the two ratchets 1226 start to slip (as shown in FIG. 14), so that the driving member 121 and the driven member 122 slip. A thrust of mutual abutting and friction may be further provided between the two ratchets 1226 through the compression spring 1225.

An implementation of the torque limiter may also implement slipping when a rotation torque of the cam 106 exceeds a preset threshold.

The unidirectional clutch 130 is drivingly connected between the torque limiter 120 and the stud 105, the unidirectional clutch 130 has a unidirectional drive function, and the unidirectional clutch 130 is configured to control a rotation direction of the stud 105 relative to the caliper body 103.

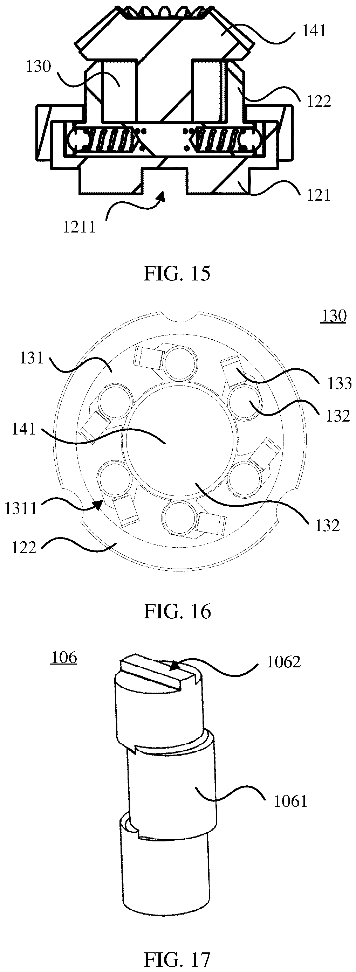

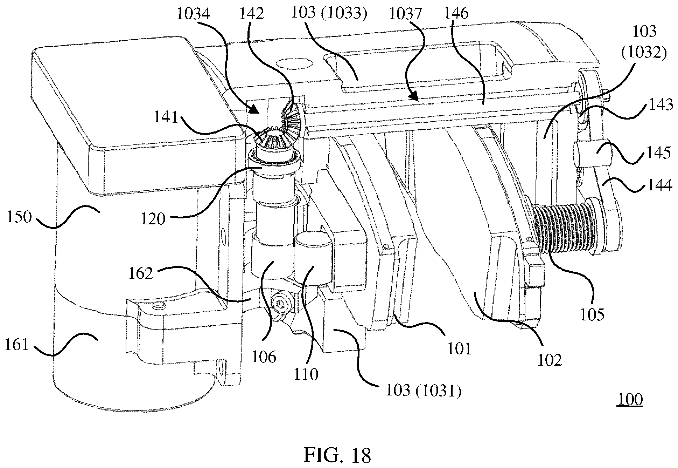

For details, refer to FIG. 15. As shown in FIG. 15, the unidirectional clutch 130 is coaxially driven with the driven member 122 of the torque limiter 120. In this case, the unidirectional clutch 130 is drivingly connected between the driven member 122 of the torque limiter 120 and the stud 105 (specifically, between the driven member 122 and an input gear 141 of a bevel gear assembly 140, as shown in FIG. 18). It may be understood that, in some other embodiments, the unidirectional clutch 130 may alternatively be coaxially driven with the driving member 121 of the torque limiter 120. In this case, the unidirectional clutch 130 is drivingly connected between the cam 106 and the driving member 121, to implement the function.

The unidirectional clutch 130 has a unidirectional drive characteristic. When the cam 106 rotates and pushes the first friction plate 101, the torque limiter 120 synchronously rotates with the cam 106 and drives the unidirectional clutch 130 to rotate. A rotation direction of the unidirectional clutch 130 is the same as a rotation direction of the cam 106, and the unidirectional clutch 130 and the cam 106 work in a driving state. In other words, the cam 106 is drivingly connected to the stud 105 through the unidirectional clutch 130 and the torque limiter 120, and while pushing the first friction plate 101, the cam 106 may drive the stud 105 to synchronously rotate.

After the electromechanical braking system 100 completes braking, the first friction plate 101 slides in a direction away from the brake disc 201, and the cam 106 rotates backward. In this case, the torque limiter 120 may synchronously rotate backward with the cam 106, the unidirectional clutch 130 is in a slipping state, and a driving connection between the cam 106 and the stud 105 is released.

As mentioned above, the spacing between the second friction plate 102 and the caliper body 103 may be adjusted through rotation of the stud 105 relative to the caliper body 103, to implement wear compensation. In the electromechanical braking system 100 in this application, wear of the first friction plate 101 and the second friction plate 102 is a unidirectional loss. In other words, the spacing between the second friction plate 102 and the caliper body 103 needs to be reduced unidirectionally, to form wear compensation.

Therefore, in this embodiment, the unidirectional clutch 130 is introduced, to control a rotation direction of the stud 105 relative to the caliper body 103, so that the stud 105 unidirectionally rotates relative to the caliper body 103 under the driving of the cam 106. In this case, the spacing between the second friction plate 102 and the caliper body 103 may be unidirectionally reduced through rotation of the stud 105 relative to the caliper body 103, to perform wear compensation. However, when the cam 106 rotates backward, the unidirectional clutch 130 slips, and a driving state between the cam 106 and the stud 105 is released. In this case, the stud 105 does not rotate backward relative to the caliper body 103, to ensure that the spacing between the second friction plate 102 and the caliper body 103 is unidirectionally reduced.

The unidirectional clutch 130 may be a ratchet-pawl clutch or an overrunning clutch. FIG. 16 is described by using an example in which a unidirectional clutch is an overrunning clutch.

As shown in FIG. 16, the unidirectional clutch includes an annular member 131, a movable body 132, and an elastic member 133. The annular member 131 is coaxially fastened to the driven member 122 of the torque limiter 120, an outer circumferential surface of the annular member 131 may be attached to an inner circumferential surface of the driven member 122, and the movable body 132 is coaxially driven with the driven member 122 of the torque limiter 120. Specifically, the annular member 131 includes a plurality of grooves 1311, the grooves 1311 are arranged along a circumferential direction of the annular member 131, and an opening of each groove 1311 faces an inner circumferential surface of the annular member 131. Groove bottoms of all grooves 1311 have different depths. Along the circumferential direction of the annular member 131, deep groove bottoms of all the grooves 1311 are located on a same side of the grooves 1311, and shallow groove bottoms of all the grooves 1311 are located on the other side of the grooves 1311.

The movable body 132 and the elastic member 133 are disposed in a pairwise manner in the groove 1311 of the annular member 131. Along a radial direction of the annular member 131, a diameter size of the movable body 132 is greater than a depth of the shallow groove bottom of the groove 1311, and is less than a depth of the deep groove bottom of the groove 1311. Each elastic member 133 is located on a side of the deep groove bottom of the groove 1311 relative to a corresponding movable body 132. The elastic member 133 is configured to push the movable body 132 to move toward a side of the shallow groove bottom of the groove 1311.

When the driven member 122 of the torque limiter 120 extends into the inner circumferential surface of the annular member 131, the driving member 121 rotates in a direction from a side of the deep groove bottom of each groove 1311 to the side of the shallow groove bottom (the rotation direction is defined as a forward rotation direction in this embodiment), and drives each movable body 132 to rotate in the direction toward the side of the shallow groove bottom of the groove 1311. The driven member 122 rubs with each movable body 132, and the movable body 132 continuously abuts against a side wall of the groove 1311 under an action of the friction force, and pushes the driven member 122 and the driving member 121 to synchronously rotate forward.

When the annular member 131 rotates forward (which may be understood as that the unidirectional clutch 130 rotates forward), the outer circumferential surface of the annular member 131 rubs with an inner circumferential surface of an inner hole of the driving member 121 (or in a form of a spline, a drive pin, or the like), and the annular member 131 drives the driven member 122 to synchronously rotate forward. The stud 105 synchronously rotates and the spacing between the second friction plate 102 and the caliper body 103 is reduced.

When the unidirectional clutch 130 shown in FIG. 16 rotates backward (in this embodiment, backward rotation means that the annular member 131 rotates in the direction from the side of the shallow groove bottom of each groove 1311 to the side of the shallow groove bottom), each movable body 132 is driven to rotate in the direction toward the side of the deep groove bottom of the groove 1311. A friction force between each movable body 132 and the driven member 122 is reduced, and the movable body 132 compresses the elastic member 133 under the action of the friction force, and a friction fit between the movable body 132 and the driven member 122 is released, so that the driven member 122 and each movable body 132 slip, and the unidirectional clutch 130 slips as a whole, to release a driving connection between the torque limiter 120 and the stud 105.

The driven member 122 does not rotate with the driving member 121 when the driving member 121 rotates backward, the stud 105 is static relative to the caliper body 103, and the spacing between the second friction plate 102 and the caliper body 103 remains unchanged.

Therefore, the rotation direction of the unidirectional clutch 130 is controlled, so that the unidirectional clutch 130 may work in a driving state or a slipping state. The unidirectional clutch 130 works in a forward rotation state, the unidirectional clutch 130 rotates forward and drives the stud 105 to rotate, and a spacing between caliper bodies 103 is reduced, to form wear compensation. The unidirectional clutch 130 works in the slipping state, and the stud 105 and the unidirectional clutch 130 slip. The unidirectional clutch 130 is disposed, to form unidirectional feeding.

In this application, in the electromechanical braking system 100, the structure of the gain bridge 110 is disposed, to implement the braking force gain in the braking process, and a structure of the unidirectional torque limiting apparatus is disposed, to implement wear compensation in a process in which the electromechanical braking system 100 works for a long period of time. Reliability of the electromechanical braking system 100 in this application is improved from two different aspects.

Power sources of the braking force gain and the wear compensation both come from a rotation action of the cam 106 relative to the caliper body 103. Because the gain bridge 110 is slidably connected to the caliper body 103, a gain of the gain bridge 110 may be always maintained through rotation of the cam 106 relative to the caliper body 103. In other words, the braking force gain of the electromechanical braking system 100 in this application is throughout an entire service life of the electromechanical braking system 100. In some working scenarios, when the electromechanical braking system 100 is stuck inside, or the like, the braking force gain provided by the gain bridge 110 can ensure that the electromechanical braking system 100 provides a reliable braking force, and ensure vehicle safety.

The stud 105 is drivingly connected to the cam 106 through the unidirectional torque limiting apparatus. The torque limiter 120 may release a driving connection between the stud 105 and the cam 106 after a torque of the cam 106 is increased. The unidirectional clutch 130 is configured to control the stud 105 to perform unidirectional feeding relative to the caliper body 103. The wear compensation of the electromechanical braking system 100 in this application is implemented based on the torque to which the cam 106 is subject. In some working scenarios, when the first friction plate 101 and the second friction plate 102 wear, the unidirectional torque limiting apparatus fits a mechanism action of the stud 105, to compensate for the wear. The torque limiter 120 is configured to implement decoupling between the cam 106 and a wear compensation mechanism.

In the conventional technology, the braking force gain and wear in the braking system are implemented by using a same mechanism. Because the braking force gain and the wear compensation need to be implemented simultaneously, a structure of the mechanism is complex. This is not conducive to processing and manufacturing costs are high. In addition, in the braking process, the braking force gain and the wear compensation are not ideal because mechanism actions affect each other.

In this application, the braking force gain and the wear compensation of the electromechanical braking system 100 are decoupled through the unidirectional torque limiting apparatus, so that the structure is simple and is easy to process, and reliability is high. In this application, in the electromechanical braking system 100, reliability is improved from two aspects through the braking force gain and the wear compensation, to adapt to more working scenarios, and ensure that the electromechanical braking system 100 can effectively provide the braking force within the service life.

The gain bridge 110 fits the first friction plate 101 to implement the braking force gain, and the stud 105 fits the second friction plate 102 to implement wear compensation. In other words, the braking force gain and the wear compensation of the electromechanical braking system 100 in this application are respectively coupled to two different friction plates, to further improve reliability of the electromechanical braking system 100. Components in the caliper body 103 are arranged in a compact manner, to further reduce an overall volume of the electromechanical braking system 100.

As mentioned above, the torque limiter 120 and the cam 106 are coaxially driven. In an embodiment, the torque limiter 120 and the cam 106 are coaxially driven by using a groove and a convex strip that fit each other. Specifically, as shown in FIG. 15 and FIG. 17, in this embodiment, the driving member 121 of the torque limiter 120 is provided with a groove 1211, and the cam 106 is provided with a convex strip 1062. Along a rotation axis of the cam 106, an opening direction of the groove 1211 faces the cam 106, and an extension direction of the convex strip 1062 faces the driving member 121. The convex strip 1062 extends into the groove 1211. The driving member 121 and the cam 106 are coaxially driven through a fit between the groove 1211 and the convex strip 1062.

It may be understood that, in some embodiments, a structure similar to the convex strip 1062 may also be disposed on the driving member 121 to fit a structure that is similar to the groove 1211 and that is disposed on the cam 106. The driving member 121 and the cam 106 are also coaxially driven through a fit between the two structures.

In an embodiment, there is a gap along the circumferential direction between the driving member 121 of the torque limiter 120 and the cam 106, and the gap along the circumferential direction is used to adjust a start time of synchronous rotation of the torque limiter 120 with the cam 106. Specifically, a width size of the groove 1211 of the driving member 121 along the circumferential direction is greater than a width size of the convex strip 1062 of the cam 106 along the circumferential direction, to form the gap along the circumferential direction between the groove 1211 and the convex strip 1062. When the cam 106 starts to rotate and push the first friction plate 101, a side wall of the convex strip 1062 has not been in contact with a side wall of the groove 1211. After the cam 106 may independently rotate by a specific angle, the convex strip 1062 is in contact with the groove 1211, and then the cam 106 drives the driving member 121 to rotate.

The specific angle may be obtained through presetting. To be specific, the width size of the convex strip 1062 and the width size of the groove 1211 are set, to control the gap along the circumferential direction between the convex strip 1062 and the groove 1211, to obtain the specific angle. In this embodiment of this application, an angle by which the cam 106 independently rotates is defined as a preset angle $\theta_0$.

The preset angle $\theta_0$ is set, to control a timing at which the torque limiter 120 starts to synchronously rotate with the cam 106. The preset angle $\theta_0$ is set, to avoid a case in which in a process in which the cam 106 rotates and pushes the first friction plate 101 each time, the stud 105 is driven to rotate relative to the caliper body 103, and the spacing between the second friction plate 102 and the caliper body 103 is adjusted. Because the electromechanical braking system 100 wears through accumulation after working for a long period of time, the preset angle $\theta_0$ may be set, so that only after the cam 106 pushes the first friction plate 101 to slide a specific distance, and the first friction plate 101 or the second friction plate 102 is not in contact the brake disc 201 due to a gap between the brake disc 201 and the first friction plate 101 or the second friction plate 102, the stud 105 is controlled to rotate relative to the caliper body 103, to compensate for the gap formed by the wear.

In other words, in this embodiment of this application, the preset angle $\theta_0$ is set, to control a sliding distance of the first friction plate 101 and/or the second friction plate 102 when the cam 106 independently rotates relative to the torque limiter 120. The sliding distance may be set in a correspondence with the spacing between the brake disc 201 and the first friction plate 101 and/or the second friction plate 102. In other words, after the cam 106 rotates by the preset angle $\theta_0$, the first friction plate 101 and/or the second friction plate 102 are in contact with the brake disc 201. If the first friction plate 101 and/or the second friction plate 102 wear/wears in this case, when the cam 106 further rotates, the torque is increased, and the torque limiter 120 slips. In this case, when the cam 106 rotates, the stud 105 is not driven to rotate relative to the caliper body 103.

After the cam 106 rotates by the preset angle $\theta_0$, if the first friction plate 101 and/or the second friction plate 102 wear/wears, when the cam 106 further rotates, the torque is small, and driving is formed between the convex strip 1062 and the groove 1211. When the cam 106 rotates, the stud 105 is driven, by using the torque limiter 120, to rotate relative to the caliper body 103, to form wear compensation of the electromechanical braking system 100.

Therefore, the gap along the circumferential direction (preset angle $\theta_0$) between the cam 106 and the torque limiter 120 is set, to adjust a timing at which the electromechanical braking system 100 starts wear compensation. In an embodiment, it is defined as follows: a maximum rotation angle of the cam 106 in the braking process is $\theta_{max}$, and a ratio, of the preset angle $\theta_0$ by which the cam 106 rotates relative to the driving member 121, to the maximum rotation angle $\theta_{max}$ of the cam 106 in the braking process meets the following condition: $1:25 \leq \theta_0 : \theta_{max} \leq 1:5$. It is set that the cam 106 independently rotates relative to the torque limiter 120 within a range of the angle, to ensure that the first friction plate 101 and/or the second friction plate 102 are/is in contact with the brake disc 201 after sliding an enough distance, and ensure that to perform wear compensation, the stud 105 rotates by an enough angle relative to the caliper body 103, to adjust the spacing between the caliper body 103 and the caliper body 103.

As shown in FIG. 3 and FIG. 4, in an embodiment, the electromechanical braking system 100 includes two studs 105, the two studs 105 are arranged at an interval along the radial direction of the studs 105, and the two studs 105 arranged at an interval along a width direction of the second friction plate 102, to increase a contact area between the stud 105 and the second friction plate 102, so that the second friction plate 102 moves toward the brake disc 201 more stably. The drive apparatus drives, through the unidirectional torque limiting apparatus, the two studs 105 to synchronously rotate.

Specifically, the cam 106 is separately drivingly connected to the two studs 105 through the torque limiter 120. The two studs 105 synchronously rotate, to synchronously adjust the spacing between the second friction plate 102 and the caliper body 103, so that the second friction plate 102 and the caliper body 103 slide relative to each other more stably, and the brake assembly also slides relative to the caliper holder 104 more stably.

In an embodiment, the rotation axis of the cam 106 intersects the axis of the stud 105. In other words, the rotation axis of the cam 106 needs to intersect with the arrangement direction of the two friction plates, to push the gain bridge 110 to drive the first friction plate 101. A rotation axis of the stud 105 is parallel to the arrangement direction of the two friction plates, and the stud 105 rotate to implement feeding of the wear compensation. The drive apparatus includes a bevel gear assembly 140, configured to change a power transfer direction of the drive apparatus, that is, change rotational motion of the cam 106 along the axis of the cam 106 in the power transfer path of the drive apparatus to rotational motion parallel to the axis of the stud 105, to further drive the stud 105 to rotate relative to the caliper body 103.

Specifically, as shown in FIG. 18, the bevel gear assembly 140 includes an input gear 141 and an output gear 142, and the input gear 141 and the driven member 122 of the torque limiter 120 are coaxially driven. In addition, in some embodiments, the input gear 141 may be further coaxially driven with the unidirectional clutch 130. The cam 106 coaxially drives the input gear 141 of the bevel gear assembly 140 through the unidirectional torque limiting apparatus.

The output gear 142 is configured to be drivingly connected to the stud 105. An axis of the output gear 142 of the bevel gear assembly 140 is parallel to the axial direction of the stud 105, and the output gear 142 of the bevel gear assembly 140 is configured to drive the stud 105 to rotate.

In an embodiment, the drive apparatus includes a drive shaft 146 and a drive wheel set. The drive shaft 146 is configured to coaxially drive the output gear 142 of the bevel gear assembly 140 and the drive wheel set, and the drive wheel set is configured to drivingly connect the drive shaft 146 and the stud 105. In other words, the output gear 142 of the bevel gear assembly 140 drives the drive shaft 146 to sequentially drive a reversing wheel set and the stud 105, to drive the stud 105 to rotate.

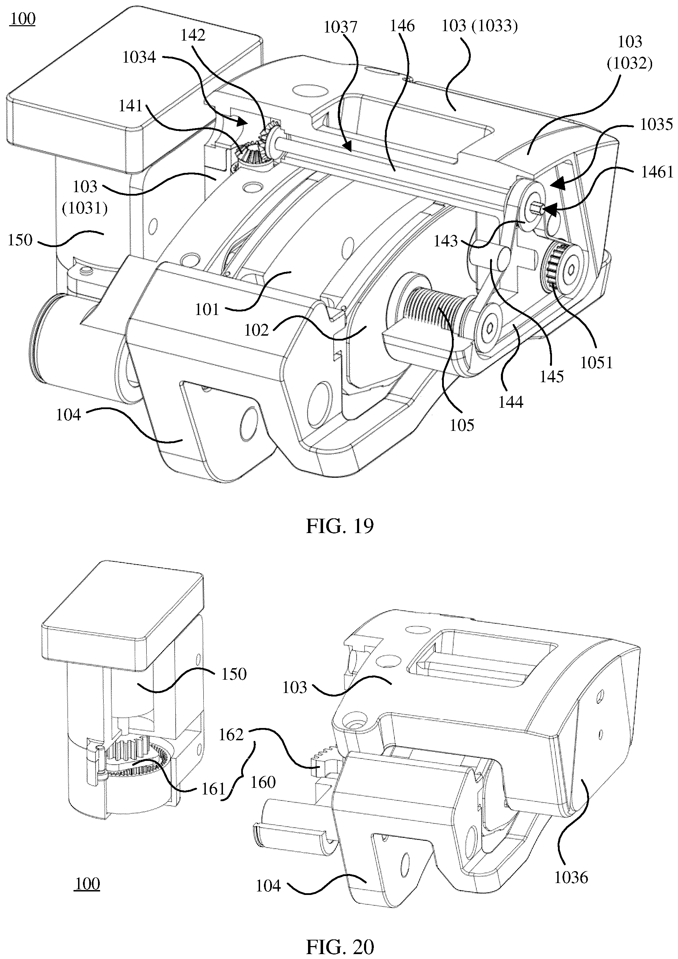

Specifically, as shown in FIG. 19, an axis of the drive shaft 146 is parallel to an arrangement direction of the two friction plates. Along an axial direction of the drive shaft 146, the drive wheel set and the bevel gear assembly 140 are respectively located on two sides of the two friction plates. In other words, the cam 106, the gain bridge 110, the first friction plate 101, the second friction plate 102, the stud 105, and the reversing wheel set are arranged sequentially. The drive shaft 146 is configured to cross the two friction plates, to transfer rotational motion on a side of the two friction plates that are close to the cam 106 to a drive wheel set on a side of the two friction plates that are away from the cam 106. The drive wheel set coaxially drives the stud 105, to drive the stud 105 to rotate.

The axis of the drive shaft 146 and the axis of the stud 105 are approximately parallel and are arranged at an interval, so that the drive wheel set is a parallel shaft drive wheel set. The parallel shaft drive wheel set includes a driving wheel coaxially driven with the drive shaft 146 and a driven wheel that is driven through a fit with the driving wheel and that is coaxially driven with the stud 105. The parallel shaft drive wheel set can be implemented by using a gear, a sprocket, a rack, a belt pulley, a crank connecting rod, or the like.

As shown in FIG. 18 and FIG. 19, the parallel shaft drive wheel set is implemented by using a belt pulley. Specifically, the parallel shaft drive wheel set includes a belt pulley 143 and a drive belt 144. The belt pulley 143 and the drive belt 144 are sequentially and drivingly connected between the drive shaft 146 and the stud 105. The output gear 142 drives, through the drive shaft 146, the belt pulley 143 to be coaxially driven. The belt pulley 143 is drivingly connected to the stud 105 through the drive belt 144.

In the embodiment shown in the figure, a driving wheel of the parallel shaft drive wheel set is the belt pulley 143, and a driven wheel of the parallel shaft drive wheel set is integrated with the stud 105, and is specifically located at an end portion that is of the stud 105 and that is away from the second friction plate 102. It may be understood that, in some embodiments, the driven wheel of the parallel shaft drive wheel set may alternatively be separately disposed, the driven wheel and the end portion that is of the stud 105 and that is away from the second friction plate 102 are coaxially driven, and the belt pulley 143 drives, through the drive belt 144, the driven wheel to rotate, to drive the stud 105 to synchronously rotate, so as to implement a wear compensation function.

Therefore, the cam 106 is drivingly connected to the stud 105 through the torque limiter 120, the unidirectional clutch 130, the bevel gear assembly 140, the drive shaft 146, the belt pulley 143, and the drive belt 144. The torque limiter 120 is configured to slip when the torque of the cam 106 exceeds a preset threshold, and the unidirectional clutch 130 is configured to implement a unidirectional drive function between the cam 106 and the stud 105.

In an embodiment, the rotation axis of the cam 106 is approximately perpendicular to the arrangement direction of the two friction plates, and the axial direction of the stud 105 is approximately parallel to the arrangement direction of the two friction plates. The rotation axis of the cam 106 intersects with the axial direction of the stud 105. In some embodiments, the rotation axis of the cam 106 is perpendicular to the axial direction of the stud 105. The bevel gear assembly 140 is configured to change a rotation direction of driving between the cam 106 and the stud 105.

Specifically, the input gear 141 and the output gear 142 of the bevel gear assembly 140 are bevel gears. The input gear 141 and the output gear 142 are fitted together, to deflect the rotation axis of the cam 106 to be parallel to the stud 105. In this way, a reversing function of the rotational motion is implemented, and it is ensured that through rotation of the cam 106, the stud 105 can be driven to rotate.

In a manner in which the belt pulley 143 is driven through a fit with the drive belt 144, when a shaft distance between the belt pulley 143 and the stud 105 is long, it can be ensured that the belt pulley 143 and the stud 105 reliably and synchronously rotate. Corresponding to a scenario in which there are two studs 105, the belt pulley 143 may further reliably drive, through the drive belt 144, the two studs 105 to synchronously rotate, to ensure that spacings between the two studs 105 and caliper bodies 103 are synchronously adjusted.

In addition, a volume of the drive belt 144 is small. When the shaft distance between the belt pulley 143 and the stud 105 is long, the drive belt 144 may relatively compress internal space of the electromechanical braking system 100 while implementing the drive function. In an embodiment, a tensioner pulley 145 is further disposed on a motion path of the drive belt 144 (as shown in FIG. 18). The tensioner pulley 145 is configured to adjust the motion path of the drive belt 144, to control a volume occupied by the drive belt 144 in the electromechanical braking system 100. In addition, the tensioner pulley 145 is further configured to adjust a tension force of the drive belt 144, so that the drive belt 144 can form reliable pressure with the stud 105, and drive, through friction, the stud 105 to rotate.

On one side of the stud 105, as shown in FIG. 18 and FIG. 19, the driven wheel of the parallel shaft drive wheel set is provided with a ratchet section 1051 in the stud 105. Surface roughness of the ratchet section 1051 is high, and the drive belt 144 is sleeved on an outer circumferential surface of the ratchet section 1051, to improve a friction force between the drive belt 144 and the stud 105, and ensure synchronous driving. Further, a ratchet structure (not shown in the figure) engaged with the ratchet section 1051 may be disposed on an inner side that is of the drive belt 144 and that faces the ratchet section 1051. The drive belt 144 may drive, through a fit between the ratchet structure and the ratchet section 1051, the stud 105 to rotate, to prevent the drive belt 144 and the stud 105 from slipping.

As shown in FIG. 3, the ratchet section 1051 that serves as the driven wheel of the parallel shaft drive wheel set and the stud 105 are separated and mutually independent structures. In this case, the ratchet section 1051 is coaxially driven with a main body portion of the stud 105 through a core shaft (shown as a core shaft 1052 in FIG. 3), or the like, to convert a driving force of the drive belt 144 into rotational motion of the stud 105. A cross-sectional shape of the core shaft 1052 may be a rectangle, a hexagon, or the like.

In an embodiment, the push portion 1032 of the caliper body 103 is further provided with an accommodation cavity 1035, and the accommodation cavity 1035 is located on a side of the two friction plates that faces the stud 105. The accommodation cavity 1035 is configured to accommodate at least the drive wheel set. The caliper body 103 further includes a cover plate 1036 (as shown in FIG. 2) for shielding an opening of the accommodation cavity 1035. Along the axial direction of the drive shaft 146, the cover plate 1036 is located on a side that is of the drive wheel set and that is away from the bevel gear assembly 140. The drive wheel set may be accommodated in the caliper body 103, to be sealed and protected.

The drive shaft 146 includes an extension section 1461, and the extension section 1461 passes through the drive wheel set and protrudes out of the cover plate 1036. On a cross section perpendicular to the extension section 1461, a shape of the extension section 1461 is a rectangle or a hexagon. The extension section 1461 of the drive shaft 146 toward the cover plate 1036 facilitates manual adjustment of a gap between the two friction plates and facilitates assembly and maintenance of the electromechanical braking system 100. Specifically, in an assembly or maintenance process of the electromechanical braking system 100 in this application, the spacing between the two friction plates may be adjusted by using the extension section 1461 of the drive shaft 146 exposed out of the cover plate 1036. Because a cross-sectional shape of the extension section 1461 is a rectangle or a hexagon, the output gear 142 may be rotated through a tool such as a wrench or a sleeve, and further, the stud 105 is driven, through the belt pulley 143 and the drive belt 144, to rotate relative to the caliper body 103.

However, in some embodiments, the extension section 1461 of the drive shaft 146 may pass through only the belt pulley 143 and be accommodated within the cover plate 1036. In this case, the cover plate 1036 may be opened to accommodate and rotate the extension section 1461, and integrity of the cover plate 1036 is maintained, so that the cover plate 1036 can better seal and protect the drive wheel set.

It may be understood that the spacing between the second friction plate 102 and the caliper body 103 may also be adjusted by manually adjusting the stud 105 to rotate relative to the caliper body 103. That is, based on the solution in the foregoing embodiment, the electromechanical braking system 100 in this application further has a function of manually implementing the wear compensation. Therefore, assembly and maintainability of the electromechanical braking system 100 are improved.

It should be noted that, as shown in FIG. 19, a connecting portion 1033 of the caliper body 103 is further provided with a through hole 1037 for accommodating the drive shaft 146. Therefore, a structure that is of the drive apparatus and that is located on the caliper body 103 may be completely accommodated inside the caliper body 103, and the caliper body 103 is configured to seal and protect a partial structure of the drive apparatus, so that the drive apparatus is reliably driven inside the caliper body 103. In an embodiment, the drive apparatus of the electromechanical braking system 100 includes a brake motor 150 and a drive mechanism 160, the drive mechanism 160 is drivingly connected between the brake motor 150 and the cam 106, and the electromechanical braking system 100 provides a driving force through the brake motor 150, to drive the cam 106 to rotate relative to the caliper body 103.

Specifically, as shown in FIG. 8, in an embodiment, the brake motor 150 is fastened to the caliper body 103, and is located on a side that is of the caliper body 103 and that is away from the first friction plate 101. An axial direction of a motor shaft of the brake motor 150 intersects with the axial direction of the stud 105. As shown in the figure, the motor shaft of the brake motor 150 may be further disposed along a direction perpendicular to the axial direction of the stud 105. Therefore, a size of the electromechanical braking system 100 along the axial direction of the stud 105 is reduced, and wheel end space is saved. The brake motor 150 drives, through the motor shaft, the drive mechanism 160 to move, and drives the cam 106 to rotate.

As shown in FIG. 20, the drive mechanism 160 includes an input member 161 and an output member 162. The input member 161 is drivingly connected to the brake motor 150, the output member 162 and the cam 106 are coaxially fastened, and the input member 161 of the drive mechanism 160 drives the output member 162 to drive the cam 106 to rotate.

As shown in FIG. 20, the input member 161 may be understood as a reducer in the electromechanical braking system 100. The reducer is drivingly connected to the brake motor 150, and is configured to change a rotation speed and a torque that are output by the brake motor 150. The output member 162 is of a sector gear structure. The output member 162 extends into a housing of the reducer, and is engaged with the reducer. The output member 162 is coaxially fastened to the cam 106, and the brake motor 150 drives the reducer to rotate, to drive the output member 162 to rotate. The output member 162 drives the coaxially fastened cam 106 to synchronously rotate, so that as shown in FIG. 10 and FIG. 11, the eccentric portion 1061 of the cam 106 abuts against or releases the gain bridge 110, to drive the first friction plate 101 to slide toward or away from the brake disc 201.

A sliding member 1063 may be further disposed at the eccentric portion 1061 of the cam 106. The sliding member 1063 abuts and is connected between the eccentric portion 1061 and the gain bridge 110, to increase a contact area of the cam 106 acting on the gain bridge 110, so that the cam 106 pushes the gain bridge 110 more smoothly.

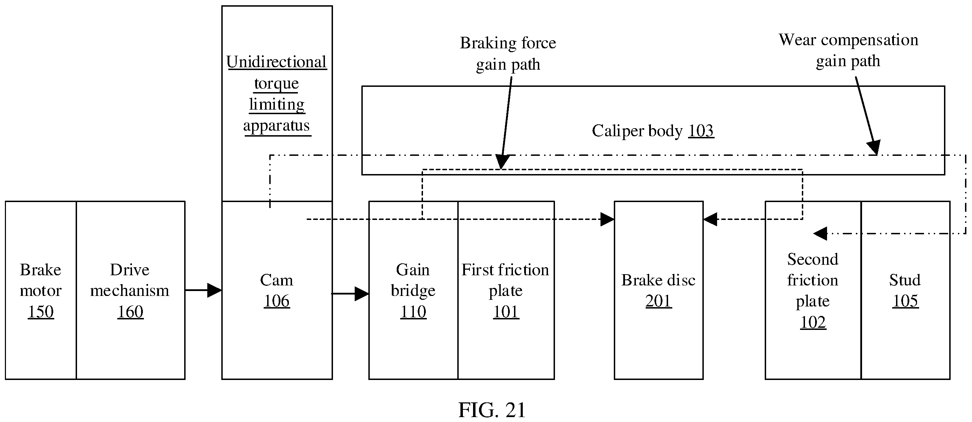

FIG. 21 shows a driving path of an electromechanical braking system 100 according to an embodiment of this application. As shown in FIG. 21, in the electromechanical braking system 100 in this application, the brake motor 150 outputs power, and the power is transferred by the drive mechanism 160 (the input member 161 and the output member 162), to drive the cam 106 to rotate. The cam 106 rotates to respectively form the wear compensation and the braking force gain through the unidirectional torque limiting apparatus and the gain bridge 110. Power for the braking force gain of the gain bridge 110 acts on the first friction plate 101, and further, the first friction plate 101 is driven to form a greater friction brake in a process of getting in contact with the brake disc 201. The gain bridge 110 is configured to increase pressure that is of the first friction plate 101 and that acts on the brake disc 201, and the pressure may further synchronously act on the second friction plate 102, to increase the braking force of the electromechanical braking system 100.

Power for wear compensation of the unidirectional torque limiting apparatus may act on the stud 105 and the second friction plate 102, and the unidirectional torque limiting apparatus drives, through driving of an internal mechanism of the electromechanical braking system 100, the stud 105 to rotate relative to the caliper body 103, so as to adjust the spacing between the second friction plate 102 and the caliper body 103 and implement wear compensation.

In the electromechanical braking system 100 in this application, the unidirectional torque limiting apparatus is disposed, so that power output by the cam 106 through rotation respectively acts on two different friction plates through two different mechanism driving paths, to respectively implement the braking force gain and the wear compensation. In addition, in a process in which the cam 106 rotates, the unidirectional torque limiting apparatus may slip based on the torque borne by the cam 106, to implement decoupling of the braking force gain and the wear compensation. The braking force gain and the wear compensation of the two friction plates do not interfere with each other. An internal structure of the electromechanical braking system 100 is simple, and reliability is high. Therefore, the vehicle provided in this application also improves reliability in the braking process.

## Claims

1. An electromechanical braking system with wear compensation, wherein the electromechanical braking system comprises a caliper body, two friction plates, a gain bridge, a stud, and a drive apparatus, the gain bridge, one friction plate, the other friction plate, and the stud are arranged sequentially, the gain bridge is configured to movably connect the caliper body and the one friction plate, and the stud is configured to drivingly connect the caliper body and the other friction plate; and
the drive apparatus is configured to: drive the gain bridge and the one friction plate, and drive the stud and the other friction plate, and the drive apparatus is further configured to drive, through a unidirectional torque limiting apparatus, the stud to rotate relative to the caliper body along an axis of the stud.

2. The electromechanical braking system according to claim 1, wherein the drive apparatus comprises a cam, the cam is configured to abut and be arranged between the gain bridge and the caliper body, and the cam is configured to be drivingly connected to the stud through the unidirectional torque limiting apparatus.

3. The electromechanical braking system according to claim 2, wherein a rotation axis of the cam intersects with the axis of the stud, and the drive apparatus comprises a bevel gear assembly;

the cam coaxially drives an input gear of the bevel gear assembly through the unidirectional torque limiting apparatus; and
an axis of an output gear of the bevel gear assembly is parallel to an axial direction of the stud, and the output gear of the bevel gear assembly is configured to drive the stud to rotate.

4. The electromechanical braking system according to claim 3, wherein the drive apparatus comprises a drive shaft and a drive wheel set, the drive shaft is configured to coaxially drive the output gear of the bevel gear assembly, and the drive wheel set is configured to drivingly connect the drive shaft and the stud;

an axis of the drive shaft is parallel to an arrangement direction of the two friction plates; and
along an axial direction of the drive shaft, the drive wheel set and the bevel gear assembly are respectively located on two sides of the two friction plates.

5. The electromechanical braking system according to claim 4, wherein the caliper body comprises an accommodation cavity, the accommodation cavity is located on a side, of the two friction plates, that faces the stud and is configured to accommodate at least the drive wheel set, and the caliper body further comprises a cover plate for shielding an opening of the accommodation cavity;

along the axial direction of the drive shaft, the cover plate is located on a side that is of the drive wheel set and that is away from the bevel gear assembly; and
the drive shaft comprises an extension section, the extension section extends toward the cover plate, and a cross-sectional shape of the extension section is a hexagon.

6. The electromechanical braking system according to any one of claims 2 to 5, wherein the electromechanical braking system comprises two studs, the two studs are arranged at an interval along a radial direction of the two studs, and the drive apparatus drives the two studs to synchronously rotate through the unidirectional torque limiting apparatus.

7. The electromechanical braking system according to any one of claims 2 to 6, wherein the unidirectional torque limiting apparatus comprises a unidirectional clutch and a torque limiter, and the drive apparatus is configured to be drivingly connected to the stud sequentially through the torque limiter and the unidirectional clutch;

the torque limiter is configured to rotate forward or backward along an axis of the torque limiter; and
the unidirectional clutch is configured to drive the stud to rotate forward with the torque limiter and is configured to limit the stud from rotating backward with the torque limiter.

8. The electromechanical braking system according to claim 7, wherein the torque limiter comprises a driving member and a driven member that are coaxially driven, the driving member and the cam are coaxially driven, and the driven member and the unidirectional clutch are coaxially fastened; and
along an axial direction of the cam, a convex strip and a groove that fit each other are provided between the driving member and the cam, and the convex strip is embedded in the groove to implement coaxial driving of the cam and the driving member.

9. The electromechanical braking system according to claim 8, wherein along a circumferential direction of the cam, a width size of the groove is greater than a width size of the convex strip, and after the cam rotates relative to the driving member by a preset angle, the convex strip and the groove are in contact with each other and coaxially rotate; and
a ratio of the preset angle $\theta_0$ by which the cam rotates relative to the driving member to a maximum rotation angle $\theta_{max}$ of the cam in a braking process meets a condition:

$$1:25 \leq \theta_0 : \theta_{max} \leq 1:5.$$

10. The electromechanical braking system according to any one of claims 2 to 9, wherein the caliper body is provided with an accommodation groove, the cam and the gain bridge are located in the accommodation groove, the cam and the one friction plate are respectively arranged on two sides of the gain bridge along the axial direction of the stud, and the cam is configured to: rotate and abut against the gain bridge, and slide in the accommodation groove to push the one friction plate.

11. The electromechanical braking system according to claim 10, wherein along the axial direction of the stud, the gain bridge comprises a fastener, a roller, and a displacement member that are arranged sequentially, the fastener is configured to abut against the cam, the displacement member is fastened to the one friction plate, and the roller is located between the fastener and the displacement member; and along the radial direction of the stud, the one friction plate is displaceable relative to the caliper body in the braking process, the displacement member is synchronously displaced with the one friction plate and reduces a spacing between the displacement member and the fastener, and the roller abuts between the fastener and the displacement member to increase a braking force.

12. The electromechanical braking system according to claim 10 or 11, wherein the fastener is provided with a first V-shaped notch toward the displacement member, the displacement member is provided with a second V-shaped notch toward the fastener, the first V-shaped notch is aligned with the second V-shaped notch along the axial direction of the stud, and when the displacement member is synchronously displaced with the one friction plate, the first V-shaped notch is driven to offset relative to the second V-shaped notch, to reduce the spacing between the displacement member and the fastener.

13. The electromechanical braking system according to claim 12, wherein the fastener is provided with at least two first V-shaped notches, and the at least two first V-shaped notches are arranged at an interval along the radial direction of the stud;

the displacement member is provided with second V-shaped notches with a same quantity as the first V-shaped notches, and each second V-shaped notch is aligned with one first V-shaped notch along the axial direction of the stud; and one roller is disposed between the first V-shaped notch and the second V-shaped notch that are aligned with each other.

14. The electromechanical braking system according to any one of claims 2 to 13, wherein the drive apparatus comprises a brake motor and a drive mechanism, and the brake motor is fastened to the caliper body and drives, through the drive mechanism, the cam to rotate;

along the axial direction of the stud, the brake motor is located on a side that is of the cam and that is away from the gain bridge, and a motor shaft of the brake motor is perpendicular to the axial direction of the stud; and an input member of the drive mechanism is drivingly connected to the brake motor, an output member of the drive mechanism and the cam are coaxially fastened, and the input member of the drive mechanism drives the output member to drive the cam to rotate.

15. A vehicle, comprising a wheel and the electromechanical braking system according to any one of claims 1 to 14, wherein an axial direction of a stud in the electromechanical braking system is approximately parallel to a rotation shaft of a brake disc of the wheel.

FIG. 1

FIG. 2

100

103

1031

1033

1032

143

140

146

144

130

150

120

105

1051

1052

110

1061

102

161  162

101

160

104

FIG. 3

FIG. 4

FIG. 5

110

1111    112    1131

111    112    113

FIG. 6

$F_a$

0.5 Nv    0.5 Nv

$F_f$

101

113
112

103 (1031)    106    111

162

FIG. 7

100

103

140

1034

106

162

110

150

161

104

FIG. 8

120

122

1223

1222

121

1221

FIG. 9

FIG. 10

FIG. 11

120

1225

122

1224
1224

121

FIG. 12

120

1225

122

1226
1226

121

FIG. 13

120

1225

122

1226
1226

121

FIG. 14

FIG. 15

FIG. 16

FIG. 17

FIG. 18

FIG. 19

FIG. 20

EP 4 578 748 A1

Unidirectional
torque
limiting
apparatus

Braking force
gain path

Wear compensation
gain path

Caliper body 103

| Brake motor 150 | Drive mechanism 160 | Cam 106 | Gain bridge 110 | First friction plate 101 | Brake disc 201 | Second friction plate 102 | Stud 105 |

FIG. 21

**EUROPEAN SEARCH REPORT**

Application Number

EP 24 21 7797

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 37 13 201 A1 (TEVES GMBH ALFRED [DE]) 27 October 1988 (1988-10-27) * the whole document * | 1-15 | INV. B60T13/74 B60T17/22 F16D55/226 |
| A | US 3 498 421 A (OHMAYER SIEGFRIED) 3 March 1970 (1970-03-03) * the whole document * | 1-15 | F16D65/18 F16D65/56 |

TECHNICAL FIELDS SEARCHED (IPC)

B60T
F16D

The present search report has been drawn up for all claims

| Place of search | Date of completion of the search | Examiner |
|---|---|---|
| Munich | 16 May 2025 | Beckman, Tycho |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7797

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | | Publication date | Patent family member(s) | | Publication date |
|---|---|---|---|---|---|
| DE 3713201 | A1 | 27-10-1988 | NONE | | |
| US 3498421 | A | 03-03-1970 | DE | 1600142 A1 | 02-04-1970 |
| | | | FR | 93027 E | 31-01-1969 |
| | | | GB | 1179890 A | 04-02-1970 |
| | | | SE | 350582 B | 30-10-1972 |
| | | | US | 3498421 A | 03-03-1970 |

EPO FORM P0459

For more details about this annex : see Official Journal of the European Patent Office, No. 12/82